# EUROPEAN PATENT SPECIFICATION

(11) **EP 3 660 708 B1**
(45) Date of publication and mention of the grant of the patent: **17.04.2024**
(21) Application number: 19206893.0
(22) Date of filing: 04.11.2019
(51) Int. Cl.: G06F 21/10, G06F 21/60, G06F 21/62, H04L 9/40

(54) **FUNCTION MANAGEMENT SYSTEM, INFORMATION PROCESSING METHOD, AND CARRIER MEANS**
FUNKTIONSMANAGEMENTSYSTEM, INFORMATIONSVERARBEITUNGSVERFAHREN, UND DANTRÄGER.
UN SYSTÈME DE GESTION DE FONCTIONS, UNE MÉTHODE DE TRAITEMENT DES INFORMATIONS, ET MOYENS DE SUPPORT DE DONNÉES

(30) Priority: 27.11.2018 JP 2018221407
(43) Date of publication of application: 03.06.2020
(73) Proprietor: Ricoh Company, Ltd., Tokyo 143-8555 (JP)
(72) Inventor: NAKAGAWA, Noriaki, Tokyo, 143-8555 (JP)
(74) Representative: SSM Sandmair

(56) References cited:
- EP-A1- 2 490 143
- EP-A2- 2 819 048
- US-A1- 2011 197 077

## Description

### BACKGROUND

### Technical Field

The present disclosure relates to a function management system, an information processing method, and a carrier means.

### Background Art

An information processing apparatus such as a server can implement various functions by executing a program and can increase or decrease the number of functions by installing or uninstalling the program. Some programs require an operation called activation that enables the function of the program during or after installation.

In the activation, usage authorization for the program is given, license information for proving the usage authorization is generated, and the license information is registered in a server or information processing apparatus. For this reason, with respect to a program that requires activation, when the function is used, the registered license information is referenced to determine whether the function can be used.

The license information described above may include identification information (lock code) that uniquely identifies the information processing apparatus in which the program is installed, and a technique for determining whether or not activation has been performed with the lock code is known. (See JP-2010-11408)

In recent years, it is costly to prepare a server or the like in-house, so the use of the cloud system is increasing.

When supporting the cloud environment, in order to enable the use of the function without interruption, it is essential to make the system redundant, for example, when one server stops for some reason, operation can be switched to another server and used.

However, with the above prior art, in order to use both servers in a redundant configuration, activation had to be performed for each of the two servers since the lock codes are different. Document EP 2819048 is considered to be an additional relevant prior-art document.

### SUMMARY

Embodiments of the present disclosure describe a function management system, an information processing method, and a carrier means. The function management system determines whether a server in which a function is introduced is a predetermined server based on settings information set for a redundant configuration including at least two servers, acquires identification information for identifying the server in which the function is introduced when a first determination unit determines that the server is the predetermined server, and determines whether the function can be used based on the identification information acquired by an acquisition unit.

According to embodiments of the present disclosure, the functions of the two systems can be used with a single activation.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a diagram illustrating an example of a system configuration having a redundant configuration;
FIG. 2 is a diagram illustrating activation of a program;
FIG. 3 is a block diagram illustrating an example of a hardware configuration of a server included in a system having a redundant configuration;
FIG. 4 is a block diagram illustrating an example of a functional configuration of a first server;
FIG. 5 is a flowchart illustrating an activation process executed by the first server;
FIG. 6 is a block diagram illustrating an example of a functional configuration of a second server; and
FIG. 7 is a flowchart illustrating a process executed by the second server.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result. The invention is defined by the independent claims 1, 7 and 8.

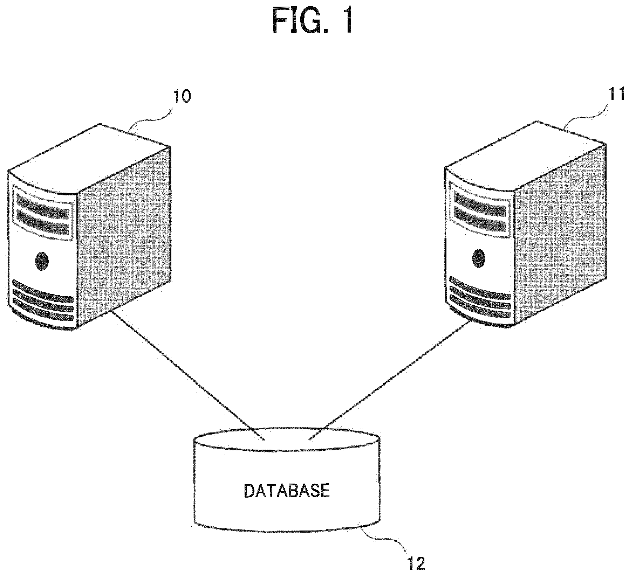

FIG. 1 is a diagram illustrating an example of a system configuration having a redundant configuration. A redundant system includes, for example, two servers 10 and 11 and a database 12. The two servers 10 and 11 are installed with the same program in order to provide the same service using the same function. The function may be a single function or a plurality of functions. For this reason, the program may be a single program, or a program package composed of a plurality of programs for implementing a plurality of functions.

The function may be any function, such as a function for controlling printing, a function for distributing data, a function for setting a workflow, and the like.

The database 12 may be provided as a storage device separate from the servers 10 and 11 or may be a storage device in the server 10 or a storage device in the server 11.

The servers 10 and 11 install a program from a storage medium such as a compact disk-read only memory (CD-ROM) or a universal serial bus (USB) memory in order to implement the function. The program may be downloaded and installed from a content server or the like through a network to which the servers 10 and 11 are connected. Here, it is assumed that the program cannot be used just by being installed but needs to be activated. Activation is performed during or after installation.

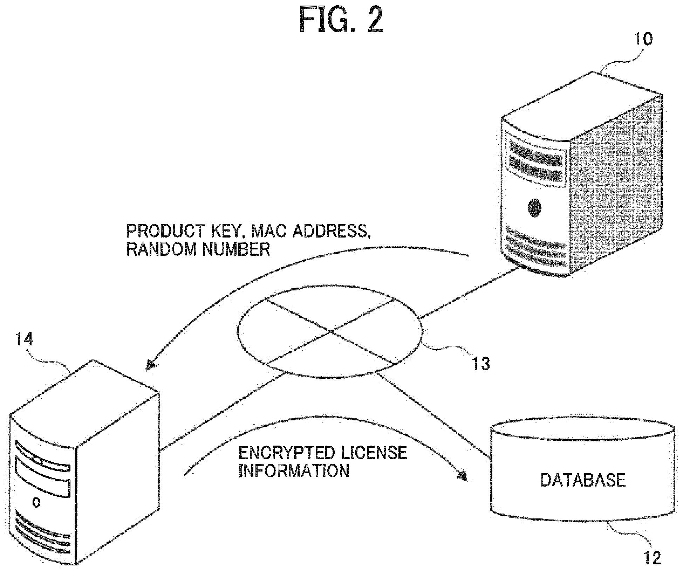

FIG. 2 is a diagram illustrating the activation executed to use the function of the program installed in the server 10. The server 10 is connected to the license server 14 through the network 13. The license server 14 is a device that creates license information.

The program is installed by a user operation. Information (product key) for identifying the usage authority (license) is assigned to the program, and the user performs license authentication by inputting and transmitting the product key to the license server 14. At this time, as information for uniquely identifying the server 10, a media access control (MAC) address, a random number unique to the server 10 generated by the server 10, which is one of the unique identifiers (IDs), a server name (host name) set in the server 10, etc., are sent together.

Two of the above described information are used as the unique information, but are not limited to two, and only one may be used, or three or more may be used. Further, as long as the information is unique to the server 10, information such as a manufacturing number (serial number) of a hard disk drive (HDD) mounted on the server 10 may be used.

The license server 14 determines validity of the product key, generates license information, and registers the license information in the database 12. The validity of the product key is determined using, for example, the license management table, considering whether a license has already been granted, and if multiple licenses are available, whether the number of licenses has been reached. The license information is created using, for example, the above-described MAC address, random number, host name, and the like, encrypted using a private key held by the license server 14, and registered in the database 12. The registration described above completes the activation.

The license server 14 provides the server 10 with a public key corresponding to the above private key. The server 10 can decode the license information in the database 12 with the public key, and extract the MAC address, random number, host name, and the like. Note that the encryption of the license information is not limited to using the public key and the private key, and any method known so far can be used.

When using the function of the program, the server 10 uses the license information registered in the database 12 to determine whether the function can be used, and then executes the program and provides a service using the function.

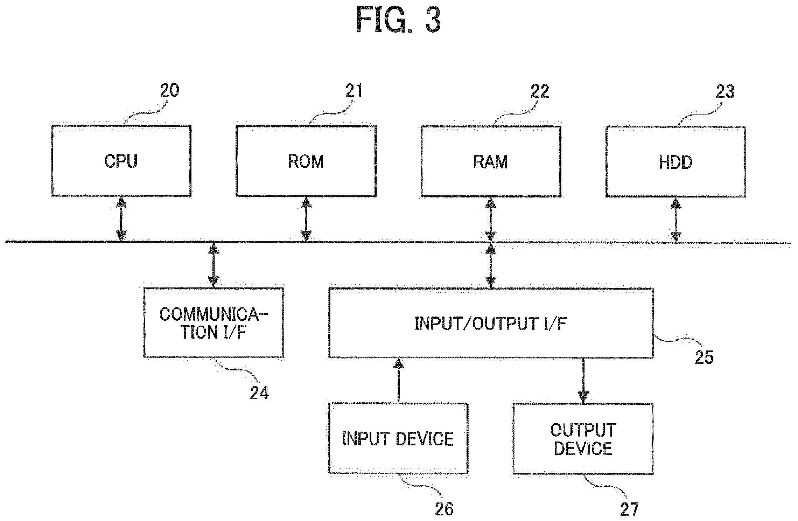

FIG. 3 is a block diagram illustrating an example of a hardware configuration of the server 10. Since the server 11 has the same hardware configuration as the server 10, description of the hardware configuration of the server 11 is omitted.

The server 10 includes a central processing unit (CPU) 20, a read only memory (ROM) 21, a random access memory (RAM) 22, an HDD 23, a communication interface (I/F) 24, an input/output I/F 25, an input device 26, and a display device 27 as hardware.

The CPU 20 controls the entire server 10 and performs transmission of a product key or the like to the license server 14, acquisition of encrypted license information, decoding of encrypted license information, and the like. The ROM 21 stores a boot program for starting the server 10 and the like. The HDD 23 stores an operating system (OS) that implements control of the server 10 and a program that implements the processing such as decoding. The RAM 22 provides a work area for the CPU 20.

The ROM 21 stores the MAC address, and the HDD 23 has a registry as a place for storing various settings information regarding the server 10 and stores the random number and the host name in the registry.

The communication I/F 24 connects the server 10 to the network 13 and enables communication with the license server 14. The input device 26 receives user input, and the display device 27 displays input information and the like. The input/output I/F 25 controls input from the input device 26 and display on the display device 27.

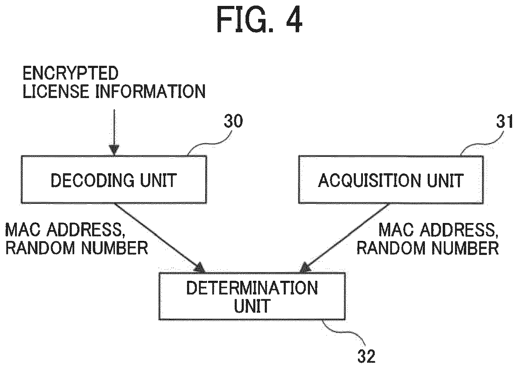

FIG. 4 is a block diagram illustrating a functional configuration of the server 10. The server 10 implements each functional unit by the CPU 20 executing the program stored in the HDD 23, and executes each process by each functional unit.

Here, all the functions are implemented by the functional unit generated by executing the program. However, the present disclosure is not limited to this, and a part or all of the functions may be implemented by hardware such as a circuit. Some or all of these functional units may not be mounted in the server 10 and may be mounted in at least one other devices or may be distributed and installed in the server 10 and at least one other devices.

The server 10 determines whether the function can be used before using the function of the program. The server 10 includes a decoding unit 30, an acquisition unit 31, and a determination unit 32 as functional units in order to execute this determination process.

The decoding unit 30 decodes the encrypted license information stored in the database 12. The license information is decoded and the MAC address, random number, etc. included in the license information are extracted. In this example, it is assumed that a MAC address and a random number are used.

The acquisition unit 31 acquires a MAC address and a random number from the ROM 21 and the HDD 23. The determination unit 32 compares the MAC address and random number acquired by the acquisition unit 31 with the MAC address and random number included in the decoded license information and determines whether acquired information and stored information match. When the acquired information and the stored information match, the determination unit 32 determines that the activation has been completed, indicating that use of the function is permitted. When it is determined that the program has been activated, the server 10 is permitted to use the function of the program.

On the other hand, when the determination unit 32 determines that the program is not activated, the server 10 is denied use of the function.

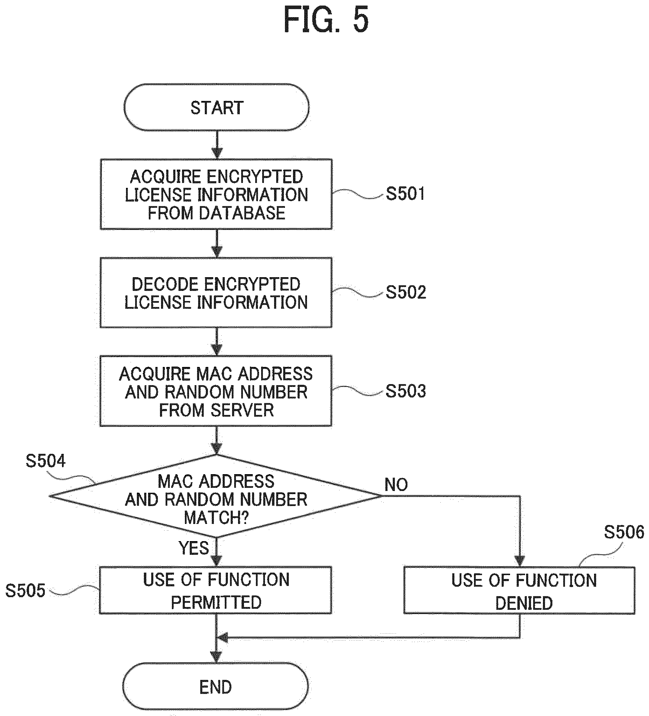

A process for determining whether a function can be used by the server 10 is described below in detail with reference to FIG. 5. The process starts by initiating the program. The program is associated with identification information that identifies the program. The program identification information is also associated with encrypted license information stored in the database 12.

In step S501, the acquisition unit 31 acquires from the database 12 the encrypted license information associated with the identification information registered in the database 12 based on the identification information for identifying the program. In step S502, the decoding unit 30 decodes the license information encrypted with the private key of the license server 14 with the public key provided by the license server 14 and extracts the MAC address and random number included in the license information.

In step S503, the acquisition unit 31 acquires the MAC address and random number stored in the ROM 21 and HDD 23. In step S504, the determination unit 32 determines whether the MAC address and random number extracted in step S502 and the MAC address and random number acquired in step S503 match.

When it is determined in step S504 that the license information match, the process proceeds to step S505, where it is determined that the program has been activated and the use of the function of the program is permitted. On the other hand, when it is determined that the license information does not match, the process proceeds to step S506, where it is determined that the use of the function of the program is denied. When the determination is completed, the determination process ends.

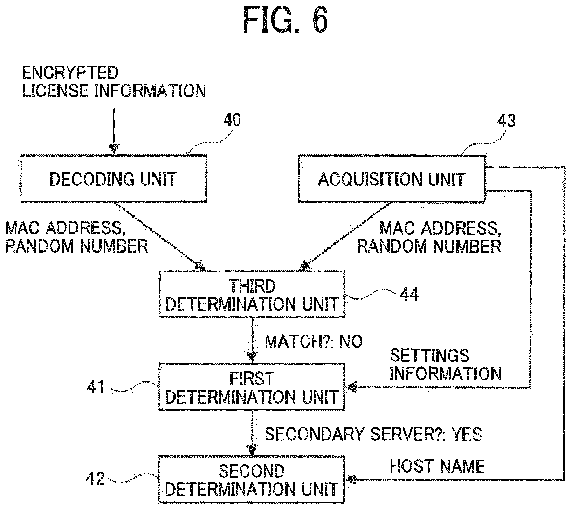

FIG. 6 illustrates a functional configuration of the server 11 in which the same program is installed for redundancy and the same function is used. When the function of the program installed on the server 11 is used, activation similar to that on the server 10 is required. This is because the license information registered in the database 12 cannot be shared between the server 10 and the server 11.

Specifically, the MAC address and random number included in the license information are those of the server 10, and the server 11 has another MAC address and random number resulting in a determination that the license information does not match and the use of the function is restricted.

The server 11 has a decoding unit 40, a first determination unit 41, a second determination unit 42, an acquisition unit 43, and a third determination unit 44 as functional units, in order to enable the use of the function without activation. Similar to the server 10, these functional units are implemented by the CPU executing a program.

Note that these functional units are not limited to those implemented by executing a program, and some or all of these functional units may be implemented by hardware such as a circuit. Some or all of these functional units may not be mounted in the server 11, may be mounted in at least one other device, or may be distributed and installed on the server 11 and at least one other device.

The decoding unit 40 decodes the encrypted license information stored in the database 12. The license information is decoded, and the MAC address and random number included in the license information are extracted. The MAC address and random number included in the license information are those of the server 10.

The acquisition unit 43 acquires a MAC address and a random number from the ROM and the HDD. The MAC address and random number are those of the server 11. The third determination unit 44 determines whether the extracted MAC address and random number and the acquired MAC address and random number match. The third determination unit 44 determines that the license information does not match, since the servers are different.

In addition to the MAC address and random number of the server 11, settings information regarding the redundant configuration and system information indicating the usage authorization of the function are stored in the storage unit such as the ROM or HDD.

When a malfunction occurs on one server in a redundant configuration, operation switches to the other server. The server that is normally operated is a primary server, and a replacement server that is switched when malfunction occurs is a secondary server. In this example, the secondary server is a predetermined server to be switched from another server of the servers in the redundant configuration, when a malfunction occurs in the another server in the redundant configuration. The settings information is information indicating that the server 10 is the primary server and the server 11 is the secondary server. The settings information may include information for identifying the primary server, such as an IP address. Since the IP address is an example, any information may be used as long as the primary server can be identified.

The system information is identification information for identifying a server that is permitted to use the functions of the program, such as a host name. The host name is an example, and any information may be used as long as the server can be identified.

The first determination unit 41 determines whether the server 11 is the secondary server based on the settings information acquired by the acquisition unit 43. When the server 11 is the secondary server, the acquisition unit 43 acquires the host name as the identification information for identifying the server 11. Then, the second determination unit 42 compares the host name acquired by the acquisition unit 43 with the system information (host name) stored in the storage unit and determines whether activation has been made based on whether the host names match.

When the second determination unit 42 determines that the activation has been completed, the server 11 is permitted to use the function of the program. As a result, the server 11 can use the function of the program without performing activation.

On the other hand, if the second determination unit 42 determines that the activation has not been completed, the server 11 is denied use of the function of the program.

In this example, the third determination unit 44 determines whether or not the function can be used based on the MAC address of the server 11 and the MAC address included in the license information. In general, since the servers are different and the determination will be that the server cannot use the function, the third determination unit 44 is not essential.

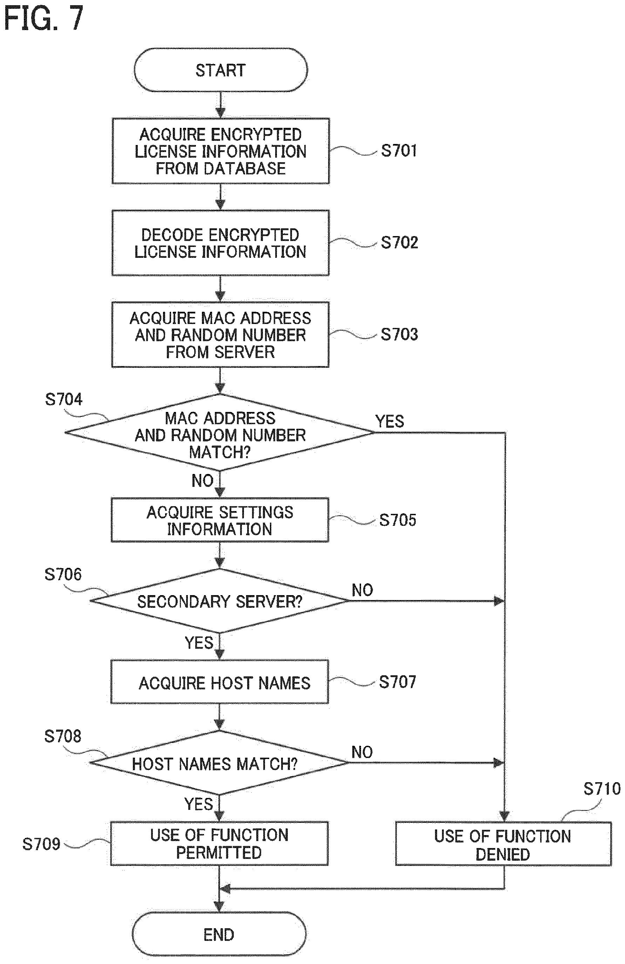

A process for determining whether a function of a program can be used by the server 11 is described below in detail with reference to FIG. 7, which is a flowchart illustrating a process executed by the second server. The server 11 functions as a substitute for the server 10. A monitoring unit mounted on the server 10 monitors whether the server 10 has failed or stopped. When the server 11 receives a notification that the server 10 has stopped, the server 11 starts to provide the same service using the same function. Accordingly, the process starts in response to receiving the notification that the server 10 has stopped. For example, when the OS is windows (registered trademark), the monitoring unit can monitor the failure of the server 10 using the windows service.

In step S701, the acquisition unit 43 acquires encrypted license information registered in the database 12 from the database 12. The license information is associated with identification information for identifying the program, and the corresponding license information can be acquired by referring to the identification information of the program to be executed by the server 11. Since the same program is installed on the servers 10 and 11, the same identification information is assigned to the program.

In step S702, the decoding unit 40 decodes the license information encrypted with the private key of the license server 14 with the public key provided by the license server 14 and extracts the MAC address and random number included in the license information. The MAC address and random number are those of the server 10.

In step S703, the acquisition unit 43 acquires the MAC address and random number stored in the ROM 21 and HDD 23. In step S704, the third determination unit 44 determines whether the MAC address and random number extracted in step S702 and the MAC address and random number acquired in step S703 match. In a system with a redundant configuration, the MAC address and random number do not match.

When it is determined that the license information does not match, the process proceeds to step S705, where the acquisition unit 43 acquires settings information. In step S706, the first determination unit 41 determines whether the server 11 is a secondary server based on the settings information. When it is determined that the server is the secondary server, in step S707, the acquisition unit 43 acquires a host name stored as system information. The acquisition unit 43 also acquires the host name set in the server 11. In step S708, the second determination unit 42 compares the acquired host names to determine whether they match.

When the host names match in step S708, the process proceeds to step S709 to determine that the program has been activated and the use of the function of the program is permitted. On the other hand, when it is determined in step S704 that the license information match, when it is determined in step S706 that the server is not a secondary server, or when it is determined in step S708 that the host names do not match, the process proceeds to step S710 where it is determined that the use of the function of the program is denied. When the determination is completed, the determination process ends.

When it is determined in step S704 that the license information match, an error may be occurring. When it is determined in step S706 that the server is not the secondary server, the settings information may not be set. When it is determined in step S708 that the host names do not match, the host name may not be set as the system information, or the host name may be entered incorrectly.

System redundancy is not limited to preparing replacement devices (servers) with the same function, but resources on one server may be divided into two logical partitions, one for normal use and the other for replacement. Moreover, three or more devices and logical partitions may be used to implement redundant configuration, instead of two for normal use and alternative use.

As described above, by storing the settings information and the system information in advance on the server 11 which is the secondary server, and determining whether the program is activated, it is possible to use the functions of the two servers 10 and 11 with a single activation on the server 10.

Although the present disclosure has been described with the above-described embodiments as the function management system, information processing apparatus, and a machine-readable, non-transitory recording medium storing instructions, the present disclosure is not limited to the above-described embodiments. The present disclosure can be modified within the scope of those skilled in the art, such as other embodiments, additions, modifications, deletions, etc., and as long as effects of the present disclosure are exhibited in any of the embodiments, the embodiments are included in the scope of the present disclosure. According to the present disclosure, it is possible to provide a recording medium in which the above program is recorded, a server device that provides the program through a network, and the like.

Any one of the above-described operations may be performed in various other ways, for example, in an order different from the one described above.

The present disclosure can be implemented in any convenient form, for example, using dedicated hardware, or a mixture of dedicated hardware and software. The present disclosure may be implemented as computer software implemented by one or more networked processing apparatuses. The processing apparatuses can include any suitably programmed apparatuses such as a general purpose computer, personal digital assistant, mobile telephone (such as a Wireless Application Protocol (WAP) or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the internet. The carrier medium can also include a storage medium for storing processor readable code such as a floppy disk, hard disk, compact disc read only memory (CD ROM), magnetic tape device or solid state memory device.

## Claims

1. A function management system comprising a first server (10), a second server (11), and a database (12), wherein the second server (12) comprises
an acquisition unit (43) configured to acquire encrypted license information registered in the database (12) from the database (12) when a malfunction occurs on the first server (10), wherein the first server (10) uses the license information to determine whether a function of a program can be used, and configured to acquire information for uniquely identifying the second server (11); and
a decoding unit (40) configured to decode the acquired license information and to extract information for uniquely identifying the first server (10),
wherein the acquisition unit (43) is configured to acquire settings information indicating that the first server (10) is a primary server and the second server (11) is a secondary server that functions as a substitute for the primary server, when the information for uniquely identifying the first server (10) and information for uniquely identifying the second server (11) do not match,
wherein the second server (11) further comprises a first determination unit (41) configured to determine whether the second server (11) is the secondary server (11) based on the settings information,
wherein the acquisition unit (43) is further configured to acquire a host name stored as system information and the host name set in the second server (11), the system information being identification information for identifying a server that is permitted to use the function, when the first determination unit (41) determines that the second server (11) is the secondary server (11),
wherein the second server (11) further comprises a second determination unit (42) configured to determine whether the acquired host names match,
wherein the second server (11) is permitted to use the function of the program when the second determination unit (42) determines that the acquired host names match, and
wherein the second server (11) is denied use of the function of the program when the second determination unit (42) determines that the acquired host names do not match.

2. The function management system of claim 1, wherein
the second determination unit (42) compares the identification information with system information set as information indicating usage authorization of the function; and
determines whether the function can be used based on whether the identification information matches the system information.

3. The function management system of claim 2, wherein
the system information includes at least one of a MAC address, a unique ID, and a host name.

4. The function management system of claim 2, wherein
the system information includes at least one of the MAC address, the unique ID, the host name, and a serial number of a storage device included in the server (10, 11) that has the usage authorization of the function.

5. The function management system of any one of claims 1 to 4, further comprising:
a third determination unit (44) configured to
compare identification information registered as authentication information to uniquely identify one of the two servers (10, 11) of the redundant configuration and the identification information that uniquely identifies the server (10, 11) that introduced the function; and
determine whether the function can be used according to whether or not both pieces of the identification information match.

6. The function management system according to any one of claims 1 to 5, wherein the function management system is an information processing apparatus for determining whether the function can be used, and
the servers (10, 11) are each an information processing apparatus.

7. An information processing method performed by a function management system comprising a first server (10), a second server (11), and a database (12), the method comprising:
when a malfunction occurs on the first server (10), acquiring (S701), by an acquisition unit (43) of the second server (11), encrypted license information registered in the database (12) from the database (12), wherein the first server (10) uses the license information to determine whether a function of a program can be used;
decoding (S702), by a decoding unit (40) of the second server (11), the acquired license information and extracting information for uniquely identifying the first server (10);
acquiring (S703), by the acquisition unit (43) of the second server (11), information for uniquely identifying the second server (11);
acquiring (S705), by the acquisition unit (43) of the second server (11), settings information indicating that the first server (10) is a primary server and the second server (11) is a secondary server that functions as a substitute for the primary server, when the information for uniquely identifying the first server (10) and information for uniquely identifying the second server (11) do not match;
determining (S706), by a first determination unit (41) of the second server (11), whether the second server (11) is the secondary server (11) based on the settings information;
acquiring (S707), by the acquisition unit (43) of the second server (11), a host name stored as system information and the host name set in the second server (11), the system information being identification information for identifying a server that is permitted to use the function, when the determining (S706) determines that the second server (11) is the secondary server (11);
determining (S709) that the use of the function of the program by the second server (11) is permitted, when it is determined (S708), by a second determination unit (42) of the second server (11), that the acquired host names match; and
determining (S710) that the use of the function of the program by the second server (11) is denied, when it is determined (S708) that the acquired host names do not match.

8. A carrier means carrying computer readable code for controlling a computer system to carry out the method according to claim 7.

## Patentansprüche

1. Ein Funktionsmanagementsystem mit einem ersten Server (10), einem zweiten Server (11) und einer Datenbank (12), wobei der zweite Server (12) Folgendes umfasst
eine Akquiseeinheit (43), die dazu eingerichtet ist, um verschlüsselte Lizenzinformationen, die in der Datenbank (12) registriert sind, von der Datenbank (12) zu akquirieren, wenn eine Fehlfunktion auf dem ersten Server (10) auftritt, wobei der erste Server (10) die Lizenzinformationen verwendet, um zu bestimmen, ob eine Funktion eines Programms verwendet werden kann, und die dazu eingerichtet ist, Informationen zur eindeutigen Identifizierung des zweiten Servers (11) zu akquirieren; und
eine Dekodiereinheit (40), die dazu eingerichtet ist, die akquirierten Lizenzinformationen zu dekodieren und Informationen zur eindeutigen Identifizierung des ersten Servers (10) zu extrahieren,
wobei die Akquiseeinheit (43) dazu eingerichtet ist, Einstellungsinformationen zu erfassen, die anzeigen, dass der erste Server (10) ein primärer Server ist und der zweite Server (11) ein sekundärer Server ist, der als Ersatz für den primären Server fungiert, wenn die Informationen zur eindeutigen Identifizierung des ersten Servers (10) und die Informationen zur eindeutigen Identifizierung des zweiten Servers (11) nicht übereinstimmen,
wobei der zweite Server (11) ferner eine erste Bestimmungseinheit (41) umfasst, die dazu eingerichtet ist, auf der Grundlage der Einstellungsinformationen zu bestimmen, ob der zweite Server (11) der sekundäre Server (11) ist,
wobei die Akquiseeinheit (43) dazu eingerichtet ist, einen als Systeminformation gespeicherten Hostnamen und den in dem zweiten Server (11) eingestellten Hostnamen zu akquirieren, wobei die Systeminformation eine Identifikationsinformation zum Identifizieren eines Servers ist, der die Funktion verwenden darf, wenn die erste Bestimmungseinheit (41) bestimmt, dass der zweite Server (11) der sekundäre Server (11) ist,
wobei der zweite Server (11) ferner eine zweite Bestimmungseinheit (42) umfasst, die dazu eingerichtet ist, festzustellen, ob die erfassten Hostnamen übereinstimmen,
wobei es dem zweiten Server (11) gestattet ist, die Funktion des Programms zu verwenden, wenn die zweite Bestimmungseinheit (42) feststellt, dass die akquirierten Hostnamen übereinstimmen, und
wobei dem zweiten Server (11) die Nutzung der Funktion des Programms verweigert wird, wenn die zweite Bestimmungseinheit (42) feststellt, dass die akquirierten Hostnamen nicht übereinstimmen.

2. Das Funktionsmanagementsystem nach Anspruch 1, wobei
die zweite Bestimmungseinheit (42) die Identifikationsinformationen mit Systeminformationen vergleicht, die als Informationen festgelegt sind, die die Nutzungsberechtigung der Funktion anzeigen; und
ermittelt, ob die Funktion verwendet werden kann, basierend darauf, ob die Identifikationsinformationen mit den Systeminformationen übereinstimmen.

3. Das Funktionsmanagementsystem nach Anspruch 2, wobei
die Systeminformationen mindestens eines aus einer MAC-Adresse, einer eindeutigen ID und einem Hostnamen enthalten.

4. Das Funktionsmanagementsystem nach Anspruch 2, wobei
die Systeminformationen mindestens eines aus der MAC-Adresse, der eindeutigen ID, dem Hostnamen und einer Seriennummer eines im Server (10, 11) enthaltenen Speichergeräts, das die Nutzungsberechtigung der Funktion hat, enthalten.

5. Das Funktionsmanagementsystem nach einem der Ansprüche 1 bis 4, das ferner umfasst:
eine dritte Bestimmungseinheit (44), die dazu eingerichtet ist:
Identifikationsinformationen, die als Authentifizierungsinformationen registriert sind, um einen der beiden Server (10, 11) der redundanten Konfiguration eindeutig zu identifizieren, und die Identifikationsinformationen, die den Server (10, 11), der die Funktion eingeführt hat, eindeutig identifizieren, zu vergleichen; und
Zu ermitteln, ob die Funktion verwendet werden kann, je nachdem, ob beide Teile der Identifikationsinformationen übereinstimmen oder nicht.

6. Das Funktionsmanagementsystem nach einem der Ansprüche 1 bis 5, wobei das Funktionsmanagementsystem eine Informationsverarbeitungsvorrichtung ist, um zu ermitteln, ob die Funktion verwendet werden kann, und
die Server (10, 11) jeweils eine Informationsverarbeitungsvorrichtung sind.

7. Ein Informationsverarbeitungsverfahren, das von einem Funktionsmanagementsystem durchgeführt wird, das einen ersten Server (10), einen zweiten Server (11) und eine Datenbank (12) umfasst, wobei das Verfahren Folgendes umfasst:
wenn eine Fehlfunktion auf dem ersten Server (10) auftritt, das Akquirieren (S701) von verschlüsselten Lizenzinformationen, die in der Datenbank (12) registriert sind, von der Datenbank (12) durch eine Akquiseeinheit (43) des zweiten Servers (11), wobei der erste Server (10) die Lizenzinformationen verwendet, um zu bestimmen, ob eine Funktion eines Programms verwendet werden kann;
das Dekodieren (S702) der erfassten Lizenzinformationen durch eine Dekodiereinheit (40) des zweiten Servers (11) und das Extrahieren von Informationen zur eindeutigen Identifizierung des ersten Servers (10);
das Akquirieren (S703), durch die Akquiseeinheit (43) des zweiten Servers (11), von Informationen zur eindeutigen Identifizierung des zweiten Servers (11);
das Akquirieren (S705), durch die Akquiseeinheit (43) des zweiten Servers (11), von Einstellungsinformationen, die anzeigen, dass der erste Server (10) ein primärer Server und der zweite Server (11) ein sekundärer Server ist, der als Ersatz für den primären Server fungiert, wenn die Informationen zur eindeutigen Identifizierung des ersten Servers (10) und die Informationen zur eindeutigen Identifizierung des zweiten Servers (11) nicht übereinstimmen;
das Feststellen (S706), durch eine erste Bestimmungseinheit (41) des zweiten Servers (11), ob der zweite Server (11) der sekundäre Server (11) ist, basierend auf den Einstellungsinformationen;
das Akquirieren (S707), durch die Akquiseeinheit (43) des zweiten Servers (11), eines Hostnamens, der als Systeminformation gespeichert ist, und des Hostnamens, der in dem zweiten Server (11) eingestellt ist, wobei die Systeminformation eine Identifikationsinformation zum Identifizieren eines Servers ist, der die Funktion verwenden darf, wenn das Feststellen (S706) feststellt, dass der zweite Server (11) der sekundäre Server (11) ist;
das Feststellen (S709), dass die Verwendung der Funktion des Programms durch den zweiten Server (11) erlaubt ist, wenn durch eine zweite Bestimmungseinheit (42) des zweiten Servers (11) festgestellt wird (S708), dass die erfassten Hostnamen übereinstimmen; und
das Feststellen (S710), dass die Verwendung der Funktion des Programms durch den zweiten Server (11) verweigert wird, wenn festgestellt wird (S708), dass die erfassten Hostnamen nicht übereinstimmen.

8. Ein Trägermittel, das einen computerlesbaren Code zur Steuerung eines Computersystems trägt, um das Verfahren nach Anspruch 7 auszuführen.

## Revendications

1. Système de gestion de fonction comprenant un premier serveur (10), un deuxième serveur (11), et une base de données (12), dans lequel le deuxième serveur (12) comprend
une unité d'acquisition (43) configurée pour acquérir des informations de licence chiffrées enregistrées dans la base de données (12) à partir de la base de données (12) lorsqu'un dysfonctionnement se produit sur le premier serveur (10), dans lequel le premier serveur (10) utilise les informations de licence pour déterminer si une fonction d'un programme peut être utilisée, et configurée pour acquérir des informations permettant d'identifier de manière unique le deuxième serveur (11) ; et
une unité de décodage (40) configurée pour décoder les informations de licence acquises et pour extraire des informations permettant d'identifier de manière unique le premier serveur (10),
dans lequel l'unité d'acquisition (43) est configurée pour acquérir des informations de paramétrage indiquant que le premier serveur (10) est un serveur primaire et que le deuxième serveur (11) est un serveur secondaire qui fonctionne comme suppléant du serveur primaire, lorsque les informations permettant d'identifier de manière unique le premier serveur (10) et les informations permettant d'identifier de manière unique le deuxième serveur (11) ne correspondent pas,
dans lequel le deuxième serveur (11) comprend en outre une première unité de détermination (41) configurée pour déterminer si le deuxième serveur (11) est le serveur secondaire (11) sur la base des informations de paramétrage,
dans lequel l'unité d'acquisition (43) est en outre configurée pour acquérir un nom d'hôte stocké en tant qu'informations de système et le nom d'hôte défini dans le deuxième serveur (11), les informations de système étant des informations d'identification permettant d'identifier un serveur qui est autorisé à utiliser la fonction, lorsque la première unité de détermination (41) détermine que le deuxième serveur (11) est le serveur secondaire (11),
dans lequel le deuxième serveur (11) comprend en outre une deuxième unité de détermination (42) configurée pour déterminer si les noms d'hôtes acquis correspondent,
dans lequel le deuxième serveur (11) est autorisé à utiliser la fonction du programme lorsque la deuxième unité de détermination (42) détermine que les noms d'hôte acquis correspondent, et
dans lequel le deuxième serveur (11) n'est pas autorisé à utiliser la fonction du programme lorsque la deuxième unité de détermination (42) détermine que les noms d'hôte acquis ne correspondent pas.

2. Système de gestion de fonction selon la revendication 1, dans lequel
la deuxième unité de détermination (42) compare les informations d'identification avec des informations de système définies en tant qu'informations indiquant l'autorisation d'utilisation de la fonction ; et
détermine si la fonction peut être utilisée sur la base du fait que les informations d'identification correspondent aux informations de système.

3. Système de gestion de fonction selon la revendication 2, dans lequel
les informations de système comprennent au moins l'un parmi une adresse MAC, un identifiant unique, et un nom d'hôte.

4. Système de gestion de fonction selon la revendication 2, dans lequel
les informations de système comprennent au moins l'un parmi l'adresse MAC, l'identifiant unique, le nom d'hôte, et un numéro de série d'un dispositif de stockage inclus dans le serveur (10, 11) qui a l'autorisation d'utilisation de la fonction.

5. Système de gestion de fonction selon l'une quelconque des revendications 1 à 4, comprenant en outre :
une troisième unité de détermination (44) configurée pour
comparer des informations d'identification enregistrées en tant qu'informations d'authentification pour identifier de manière unique l'un des deux serveurs (10, 11) de la configuration redondante et les informations d'identification qui identifient de manière unique le serveur (10, 11) qui a introduit la fonction ; et
déterminer si la fonction peut être utilisée selon que les deux éléments des informations d'identification correspondent ou non.

6. Système de gestion de fonction selon l'une quelconque des revendications 1 à 5, dans lequel le système de gestion de fonction est un appareil de traitement d'informations permettant de déterminer si la fonction peut être utilisée, et
les serveurs (10, 11) sont chacun un appareil de traitement d'informations.

7. Procédé de traitement d'informations réalisé par un système de gestion de fonction comprenant un premier serveur (10), un deuxième serveur (11), et une base de données (12), le procédé comprenant :
lorsqu'un dysfonctionnement se produit sur le premier serveur (10), l'acquisition (S701), par une unité d'acquisition (43) du deuxième serveur (11), d'informations de licence chiffrées enregistrées dans la base de données (12) à partir de la base de données (12), dans lequel le premier serveur (10) utilise les informations de licence pour déterminer si une fonction d'un programme peut être utilisée ;
le décodage (S702), par une unité de décodage (40) du deuxième serveur (11), des informations de licence acquises et l'extraction d'informations permettant d'identifier de manière unique le premier serveur (10) ;
l'acquisition (S703), par l'unité d'acquisition (43) du deuxième serveur (11), d'informations permettant d'identifier de manière unique le deuxième serveur (11) ;
l'acquisition (S705), par l'unité d'acquisition (43) du deuxième serveur (11), d'informations de paramétrage indiquant que le premier serveur (10) est un serveur primaire et que le deuxième serveur (11) est un serveur secondaire qui fonctionne comme suppléant du serveur primaire, lorsque les informations permettant d'identifier de manière unique le premier serveur (10) et les informations permettant d'identifier de manière unique le deuxième serveur (11) ne correspondent pas ;
la détermination (S706), par une première unité de détermination (41) du deuxième serveur (11), du fait que le deuxième serveur (11) est ou non le serveur secondaire (11) sur la base des informations de paramétrage ;
l'acquisition (S707), par l'unité d'acquisition (43) du deuxième serveur (11), d'un nom d'hôte stocké en tant qu'informations de système et du nom d'hôte défini dans le deuxième serveur (11), les informations de système étant des informations d'identification permettant d'identifier un serveur qui est autorisé à utiliser la fonction, lorsque la détermination (S706) détermine que le deuxième serveur (11) est le serveur secondaire (11) ;
la détermination (S709) du fait que l'utilisation de la fonction du programme par le deuxième serveur (11) est autorisée, lorsqu'il est déterminé (S708), par une deuxième unité de détermination (42) du deuxième serveur (11), que les noms d'hôte acquis correspondent ; et
la détermination (S710) que l'utilisation de la fonction du programme par le deuxième serveur (11) n'est pas autorisée, lorsqu'il est déterminé (S708) que les noms d'hôte acquis ne correspondent pas.

8. Moyen porteur portant un code lisible par ordinateur pour commander un système informatique afin d'effectuer le procédé selon la revendication 7.
